(19)

**Europäisches Patentamt**
**European Patent Office**
**Office européen des brevets**

(11) **EP 1 485 587 B1**

(12) **EUROPEAN PATENT SPECIFICATION**

(45) Date of publication and mention
of the grant of the patent:
**11.04.2007 Bulletin 2007/15**

(51) Int Cl.:
**F01N 3/022** (2006.01)

(21) Application number: **03742994.1**

(86) International application number:
**PCT/IB2003/000663**

(22) Date of filing: **21.02.2003**

(87) International publication number:
**WO 2003/072915 (04.09.2003 Gazette 2003/36)**

(54) **TREATMENT OF EXHAUST GASES FROM AN INTERNAL COMBUSTION ENGINE**

BEHANDLUNG VON ABGASEN AUS EINEM VERBRENNUNGSMOTOR

TRAITEMENT DE GAZ D'ECHAPPEMENT PROVENANT D'UN MOTEUR A COMBUSTION INTERNE

(84) Designated Contracting States:
**AT BE BG CH CY CZ DE DK EE ES FI FR GB GR HU IE IT LI LU MC NL PT SE SI SK TR**

(30) Priority: **28.02.2002 ZA 200201706**
**13.06.2002 ZA 200204770**
**17.07.2002 ZA 200205703**
**23.08.2002 ZA 200206784**

(43) Date of publication of application:
**15.12.2004 Bulletin 2004/51**

(73) Proprietor: **CSIR**
**0002 Pretoria (ZA)**

(72) Inventor: **FULS, Paul, Fritz**
**0081 PRETORIA (ZA)**

(74) Representative: **Becker Kurig Straus**
**Patentanwälte**
**Bavariastrasse 7**
**80336 München (DE)**

(56) References cited:
**EP-A1- 0 225 402          WO-A1-00/39437**
**WO-A1-96/05906          US-A- 4 283 207**
**US-A- 4 390 355          US-A- 5 330 728**

• **PATENT ABSTRACTS OF JAPAN & JP 04 301 130 A (MATSUSHITA ELECTRIC IND. CO. LTD.) 23 October 1992**

**Description**

THIS INVENTION relates, broadly, to the treatment of exhaust gases from an internal combustion engine. More particularly, the invention relates to a wall-flow body suitable for use in the treatment of exhaust gases from an internal combustion engine, to a core for a catalytic converter or a catalytic trap, and to a treatment device for the treatment of exhaust gases from an internal combustion engine.

EP 0 225 402 A1 discloses a wall-flow body with passages opening out in an outlet face and in which the passages are non-perpendicular to the outlet face. An acute angle between a centrally disposed longitudinal axis of radially outermost passages (which are angled the most relative to the outlet face) and the outlet face is however not much less than 90 ° and definitely substantially larger than 70 °. The purpose of this arrangement is to increase the thickness of partition walls gradually from inlet side end portions toward outlet side end portions of the wall-flow body so that fine particles contained in exhaust gas are uniformly collected to ensure a high collection efficiency and no local clogging. JP 04 301 130 A discloses a wall-flow body with an inlet face having a region which is slanted relative to the direction of the passages and a central region which is perpendicular to the direction of the passages. According to JP 04 301 130 A, the purpose of the slanted portion of the inlet face is to reduce conductive heat transfer from the slanted or inclined region of the inlet face to the heating chamber in which the filter is housed. In turn, this is supposed to improve filter regeneration in radially outer regions of the filter by ensuring higher temperatures in the outer region and improved air flow to the outer region. US 5 330 728 discloses a flow-through body with inlet and outlet faces which are non-perpendicular to the linear, parallel passages extending through the body. This arrangement allows the flow-through body to be mounted within a canister so that the flow-through body has an increased frontal or inlet area without a corresponding increase in converter cross-section while the angled flow channels minimise the effect of the angled mounting of the flow-through body relative to the exhaust flow on the back pressure imposed on the exhaust system by such a catalytic converter.

According to one aspect of the invention, there is provided a porous wall-flow body suitable for use in the treatment of exhaust gases from an internal combustion engine, the body having a plurality of passages extending along its interior between a gas inlet end or face of the body and a gas outlet end or face of the body, a centrally disposed longitudinal axis through an opening in one of said faces into at least one of the passages being non-perpendicular to at least one tangent to said face which intersects the central longitudinal axis an acute angle between the centrally disposed longitudinal axis and the target being 70° or less.

Preferably, centrally disposed longitudinal axes through the openings of a plurality of the passages are each non-perpendicular to at least one tangent to one of said faces intersecting the central longitudinal axis. In one embodiment of the invention, the centrally disposed longitudinal axes through the inlets or outlets of all of the passages are non-perpendicular to respective tangents respectively to the gas inlet face or gas outlet face intersecting the central longitudinal axes.

An acute angle between the centrally disposed longitudinal axis and the tangent is preferably between about 45 ° and about 25 °, more preferably between about 40 ° and about 30°, e.g. 35°.

The passages may have a maximum length of 110 mm. The maximum length of the passages and the volume of the body may be such that the ratio of the maximum length to the volume is at least $1 : 5000 \text{ mm}^{-2}$.

The ratio of the maximum length to the volume may be in a range with a lower limit and an upper limit, the lower limit being at least $1 : 5000 \text{ mm}^{-2}$ as hereinbefore stated. The lower limit may however be as high as about $1 : 10000 \text{ mm}^{-2}$, or even as high as about $1 : 20000 \text{ mm}^{-2}$. The upper limit may be as low as about $1 : 30000 \text{ mm}^{-2}$, or higher at about $1 : 60000 \text{ mm}^{-2}$, or even as high as about $1 : 120000 \text{ mm}^{-2}$.

The body may have a thermal conductivity of at least 1 W/mK. Preferably the body has a thermal conductivity of at least 5 W/mK, more preferably at least 10 W/mK, most preferably at least 20 W/mK.

In a porous wall-flow body, each passage typically opens out of at least one end or face of the body, at least some of the passages being constricted by constrictions at positions closer to the one end or face of the body than to the other end or face of the body and opening out of said other end or face of the body, and at least some of the passages being constricted by constrictions at positions closer to said other end or face of the body than to said one end or face of the body and opening out of said one end or face of the body. Preferably, all of the passages are linear and parallel. The body has an open porous interior comprising open-ended pores, and the constrictions of the passages act to promote the flow of gas entering the open ends of constricted passages at the end or face of the body remote from their constrictions, in a direction transverse to the passages and through the porous interior of the body, i.e. through walls of the passages, into passages having open ends at the opposite end or face of the body and remote from their constrictions, and thence out of the body via said open ends at the opposite end or face of the body

The constrictions can act merely to throttle the passages by reducing the cross-sectional area thereof available for gas flow along them, or the constrictions can act to block and close off the passages, to prevent gas flow out of the closed off passages. The degree of constriction will be selected, together with the porosity of the material of the body, the spacing of the passages from one another and the cross-sectional areas of the passages, to promote a desired degree of said transverse gas flow through the porous interior of the body, compared with any gas flow which takes place along the passages from one end of the body to the other without entering the porous interior of the body. If all the passages having open ends at their upstream ends are blocked, then all the gas entering the body via the open ends of passages will at some stage flow transversely through the porous material of the body, but if at least some of the passages having open ends at their upstream ends are not blocked and are merely throttled or not constricted at all, then some gas can pass straight through the body along such passages, without entering the porous interior of the body at all.

The passages need not all be of the same cross-sectional outline or the same cross-sectional area and such area of a passage need not remain constant in magnitude or shape along its length. Thus, some passages may be narrower or broader than others, whereas some may be of circular cross-section and/or others may be of square/ rectangular or even star-shaped cross-section. It will thus be appreciated that there is considerable freedom in terms of the invention, to vary the size and shape of the passages, the positions thereof in the body and the numbers and spacing thereof from one another, and the porosity of the body, to promote a desired pattern of gas flow from one end of the body to the other, at least some of the gas passing through the porous interior of the body. However, it is envisaged that the most popular configuration of the passages will be one of exclusively blocked, linear parallel passages.

Thus, in a particular embodiment of the invention substantially half of the passages may open out of one end or face of the body, the passages extending to the other end or face of the body, at which other end or face of the body they are closed off, the remaining substantially half of the passages opening out of said other end or face of the body and extending substantially all the way to said one end or face of the body, where they are closed off, the passages all being of the same cross-sectional outline, the passages being arranged so that, except adjacent a surface of any side of the body between its ends or faces, each passage opening out of the one end or face of the body is surrounded by passages opening out of the other end or face of the body and each passage opening out of the other end or face of the body is surrounded by passages opening out of the one end or face of the body, the passages adjacent the surface of any side of the body being only partially so surrounded. By substantially half of the passages are meant 49 % to 51 % thereof, and it should be noted that the body can have a single side if it is non-polygonal in cross-section, e.g. circular or elliptical or the like in cross-section, or it can have several sides, e.g. if it is polygonal in cross-section.

Preferably, the gas inlet end or face and the gas outlet end or face is planar, with all the passages being arranged non-perpendicular to the faces. However, other configurations, such as stepped or convexly or concavely curved faces, are not excluded from the scope of the invention.

The length of the passages may be in a range with a lower limit which is as short as about 40 mm, or as short as about 20 mm, or even as short as about 10 mm. An upper limit of the range may be as long as about 60 mm, or as long as about 80 mm, or as long as 100 mm, or even as long as about 110 mm as hereinbefore stated, e.g. about 49 mm.

One end or face of the body may have a projected area which may fall in a range with a lower limit which may be about 25000 $mm^2$, or as low as about 15000 $mm^2$, or even as low as about 5000 $mm^2$. An upper limit of the range may be about 30000 $mm^2$, or as high as about 60000 $mm^2$, or even as high as about 120000 $mm^2$. The other end or face of the body may have the same projected area as the one end or face of the body, or may have a different projected area.

In one embodiment of the invention, in side view, the body has an outline in the shape of a parallelogram with sides defining at least one corner which is not a right angle. In this particular embodiment of the invention, the body is rectangular in a section parallel to the faces, with a projected area of the one end or face and the other end or face being rectangular in outline. Naturally, the body may, instead, be square, circular, elliptical, oval, or of some other desired section taken parallel to the faces or transverse to the passages.

The passages may have a cross-sectional area in a range with a lower limit that may be about 2 $mm^2$, or as low as about 1.5 $mm^2$, or even as low as about 1 $mm^2$. An upper limit of the range may be about 3 $mm^2$, or as high as about 12 $mm^2$, or even as high as about 48 $mm^2$.

The passages are preferably equally spaced from one another, although other spacing arrangements are not excluded from the scope of the invention. A spacing between adjacent passages may be in a range with a lower limit of about 0.3 mm, or as low as about 0.2 mm, or even as low as about 0.1 mm. An upper limit of the range may be about 1 mm, or as high as about 2 mm, or even as high as about 5 mm. The spacing provides a measure of the thickness of the porous body material between adjacent passages, i.e. the wall thickness of the passages. The cross-sectional area of the passages and the passage spacing are typically selected such that a passage density is obtained which is in a range with a lower limit of about 1 cell/passage per 10 $mm^2$. The lower limit may be as low as about 1 cell/passage per 25 $mm^2$ or even as low as about 1 cell/passage per 70 $mm^2$. An upper limit of the range may be about 1 cell/passage per 5 $mm^2$, or as high as about 1 cell/passage per 3 $mm^2$, or even as high as about 1 cell/passage per 2 $mm^2$.

The passages may have a polygonal or non-polygonal cross-section. In one embodiment of the invention, the passages are square or rectangular in cross-section, and are arranged in a square grid arrangement. Naturally, passages of other cross-sections (e.g. elongate, rectangular, elliptical, oval, star-shaped, etc.) may be used instead, but will typically be of the same cross-sectional area and spacing/arrangement as described hereinbefore.

The passages may have a constant cross-sectional area along their length. Instead, at least some of the passages may be tapered. In one embodiment of the invention, passages having open ends in the one end of the body taper towards their closed ends at the other end of the body, with passages having their open ends in the other end of the body having a constant cross-sectional area along their lengths. Instead, in another embodiment of the invention, passages having open ends in the one end of the body taper towards their closed ends at the other end of the body, and passages having their open ends in the other end of the body taper towards their closed ends in the one end of the body. Thus, as will be appreciated, for square or rectangular passages, in the one embodiment the wall thickness of a passage varies along its length, whereas in the other embodiment the wall thickness can be constant along the length of a passage.

When all the passages of the body are blocked or closed off, this is suitable for treating fluids, which are sufficiently free of solids such as entrained particles, e.g. ash or soot, which can blind the pores of the body. When such particles are expected, the passages which receive fluid via their open ends and which form fluid inlet passages into the body can be open at both ends, being constricted e.g. by tapering or by having wasted or venturi-shaped constrictions at their downstream ends, to permit particles to issue therefrom so that particle build-up therein is resisted. Naturally, the passages opening out of the downstream end of the body and which form outlet passages from the body and which receive fluid from the porous interior of the body can be closed off or blocked at their upstream ends, if desired. A body having its inlet passages unblocked and not closed off, and its outlet passages blocked or closed off at their upstream ends, can, in principle, in addition to being self-cleaning of particles, also be used to separate particles such as ash or soot, from e.g. diesel exhaust, gases containing particles and issuing from the downstream end of the inlet passages and being kept separate from clean gases issuing from the outlet passages, thereby to clean at least part of the gases in question. Naturally, a body with closed off inlet passages is particularly suitable for use as a diesel particulate material trap or the like.

The material of the body has an open porous interior made up of open pores, capillaries or tubules which are interconnected to one another and, except for negligibly few exceptions, are not closed off and isolated from one another, and which open out of openings at the surface of the body. The body may have an average pore size in a range with a lower limit of about 10 $\mu$m, or as low as about 5 $\mu$m, or even as low as about 2 $\mu$m. An upper limit of the range may be about 80 $\mu$m, or as high as about 100 $\mu$m, or even as high as about 200 $\mu$m. In this regard, the terms "pores" and "porous" are thus not limited to the openings out of the surface of the body, but include also the interconnected capillaries and tubules in the interior of the body; and the open porous interior is to be contrasted with a closed porous interior in which the pores are closed off and are isolated from one another. The number, size and spacing of the pores may be selected accordingly. In particular, the open porous interior of the body may comprise pores having an average pore size of between about 40 $\mu$m and about 80 $\mu$m, the body material, excluding the volumes of the passages, having a percentage porosity of between about 30 % and about 90 %, preferably between about 40 % and about 75% e.g. about 50 %, as defined by the equation:

$$\text{percentage porosity} = 100 \times \frac{\rho_c - \rho_m}{\rho_c}$$

in which:

$\rho_c$ is the density of the material of the body excluding any passages or pores; and
$\rho_m$ is the bulk density of the body as a whole, excluding any passages but including the pores.

The body may be in the form of a monolith. Instead, it may comprise a plurality of body elements fitted together to form the wall-flow body.

If desired, one set of passages, i.e. one set of passages having open ends in the same end or face of the porous body may include membranes of lower average pore size than the average pore size for the entire porous body, lining the passages. Such membranes ensure a very high filtration efficiency for the porous body and inhibit the passing of soot particles through the porous body (i.e. so-called "blow-off"), even when the porous body is clean with no filter cake. In such an embodiment of the invention, it is possible to increase the average pore size of the porous body excluding the membranes to improve the catalytic regeneration possibilities in the porous body when used as a core for a catalytic converter, without reducing the filtration efficiency of the core. As will be appreciated, this arrangement allows soot particles to penetrate the porous body, but inhibits the soot particles from leaving the porous body. The membranes may be established by means of a gradient of the pore size of the porous body along the thickness of the walls between the passages, starting with relatively large pores and ending with pores which are sufficiently small to ensure that soot will not leave the porous body. Instead, it is also possible to have a transition directly from a large pore size to a small pore size. The membranes may be thin, with a thickness from 0.02 mm to 5 mm, preferably from 0.05 mm to 0.4 mm and the membranes will typically have an average pore size in the range of 1 μm to 50 μm, preferably 2 μm to 15 μm. The membranes may be obtained either by fastening a separate layer having a suitable pore size to the passages or by actually reducing the pores in the vicinity of the passages in the porous body. A preferred way of adding the membranes to the passages is to manufacture a slurry containing the particles or fibres to constitute the membranes, and to pass this slurry through the porous body, in a direction opposite to the direction through which gas in use will be filtered by the porous body.

The porous body may be of a metal material selected from the group consisting of aluminium, copper, iron, alloys thereof, such as brass, bronze, duraluminium, and stainless steel. Other metals such as chromium, molybdenum, nickel, silver and titanium may advantageously be employed in the porous body or in combinations of alloys making up the porous body. Furthermore, other metals such as manganese, vanadium, yttrium, and rare earth metals-such as cerium, lanthanum, neodymium, and noble metals such as platinum, palladium and rhodium may be employed. Instead, the porous body may be of a material selected from the group consisting of SiC, $B_4C$, $Na_xWO_3$ where x is between 0 and 1, such as x being between 0.3 and 0.9, $M_2B$, MB, $MB_2$, $M_2B_5$, $M_2C$, MN, $M_3Si$, $M_3Si_2$, $M_5Si_3$ and $MSi_2$ where M is either Mo or W. The porous body may be a ceramic body. Typically, the porous body is made from particulate material. The particulate material may have a particle size of between about 1 μm and about 250 μm, preferably between about 10 μm and about 150 μm, typically between about 30 μm and about 100 μm. In one embodiment of the invention, the porous body is of an admixture of a ceramic material and an adjunct that raises the thermal conductivity of the porous body to at least 5 W/mK. The adjunct may be selected from the materials mentioned hereinbefore.

The invention extends to a core for a catalytic converter, the core comprising a porous wall-flow body as hereinbefore described, and a suitable catalyst for the conversion of undesirable pollutants in combustion gases from internal combustion engine exhausts, the catalyst being supported by the body.

The core thus includes a catalyst for the treatment of combustion gases by catalytic conversion of undesirable components of said gases into a less undesirable form. The catalyst is supported on the surfaces of the pores in the porous interior of the body. Some of the catalyst may however also be supported on the surfaces of any passages extending along the interior of the body.

Routine experimentation will be employed to determine a suitable catalyst density, i.e. mass of catalyst/unit volume of the body or number of catalytically active sites/unit volume of the body, for effective catalytic conversion, and for a platinum/rhodium (Pt/Rh) catalyst of the type commonly used for this purpose, it is expected that a more or less conventional catalyst density may be used.

The invention further extends to a core for a catalytic trap for diesel particulate control, the core comprising a porous wall-flow body as hereinbefore described, and a suitable catalyst for promoting combustion of diesel particulate material trapped by the body, the catalyst being supported by the body.

The core thus includes a catalyst, which allows catalytic combustion of diesel particulate material (typically a mixture of soot aggregates carrying absorbed hydrocarbons, sulphates and metal oxides) at diesel exhaust temperatures of about 150 °C to 500 °C, typically 350 °C to 450 °C. The catalyst is supported on the surfaces of the pores in the porous interior of the body. Some of the catalyst may however also be supported on the surfaces of any passages extending along the interior of the body.

If the porosity of the porous body is sufficiently high enough, the porous body may include a surface-increasing coating in the passages and pores of the body to increase the area in which the gas or soot interacts with the catalyst. The surface increasing coating may be in the form of a so-called "wash coat" which is deposited by washing a solution or slurry containing the catalyst through the porous body in order for some of the substance to deposit on the passages and pore walls.

The catalyst may be a Cu-K-V based catalyst. Instead, or in addition, the catalyst may be a catalyst based on a mixture of vanadates and chlorides, which favour the catalytic combustion of the diesel particulate material via redox mechanisms mostly governed by vanadates. The catalyst may also be, or may include, a so-called diesel oxidation catalyst (DOC), which can typically reduce the total particulate load of diesel exhaust gases by 30 % to 50 % by oxidising the soluble organic fraction of the diesel exhaust, in addition to oxidising gaseous hydrocarbons and carbon monoxide. DOC typically consists of platinum or palladium, or both, dispersed on a high surface area carrier such as aluminium oxide or silicon dioxide that maximises contact with the gases and liquid organics.

The selection of any specific material for the porous body may be influenced by many factors, including the ability of the material per se to act as a catalyst for the conversion of undesirable pollutants in combustion gases from internal combustion engine exhausts or for catalysing combustion of diesel particulate material, and/or the compatibility of the material with such catalysts. Thus, copper alloys or combinations of alloys, e.g. brass and bronze alloys and furthermore some metal oxides, e.g. ferrous oxides and manganese oxides, have been stated to have a carbon oxidation catalyst effect, and brass and bronze or generally copper alloys may thus be suitable materials for the porous body. Further considerations as to additional materials, such as binders, and resistance to the environment to which the porous body is exposed, may also influence the selection of material or materials. Naturally, cost and high thermal conductivity are important and it is believed that the metals aluminium, copper and iron or steel may play an important role in the porous wall-flow body of the invention. From a cost perspective, a ceramic wall-flow body is attractive.

The invention extends also to a treatment device for the treatment of exhaust gases from an internal combustion engine, the device including a porous wall-flow body as hereinbefore described, located in a housing having an exhaust gas inlet or upstream portion and an exhaust gas outlet or downstream portion.

The direction of the passages of the body may be at an angle of 180 ° or less to a centrally disposed axis through the exhaust gas inlet or upstream portion and/or to a centrally disposed axis through the exhaust gas outlet or downstream portion, e.g. at an angle of between about 90 ° and about 175 °, typically between about 135 ° and about 175 °.

In a particularly advantageous embodiment of the treatment device, the gas inlet face and/or the gas outlet face of the porous wall-flow body, when projected onto the housing along an axis perpendicular to the face itself, covers an interior surface area of the housing which is larger than the area of the face itself, thereby to enhance radiant heat exchange between the gas inlet face and/or gas outlet face and the housing, with at least one of the inlet face or outlet face of the body being non-perpendicular respectively to a centrally disposed axis through the exhaust gas inlet or upstream portion or the exhaust gas outlet or downstream portion.

Typically, the housing fits in a substantially airtight fashion around the body so that no more than a negligible amount of exhaust gas can flow through the inlet or upstream portion of the housing to the outlet or downstream portion of the housing around the body, without passing through the body. In other words, the body may be located in a metal housing, the housing having opposite ends each provided respectively with an opening which provide respectively an exhaust gas inlet or upstream portion and an exhaust gas outlet or downstream portion, the body being arranged in the housing in a fashion which causes at least a major proportion, of any exhaust gases entering the inlet or the upstream portion to pass through the interior of the body, via the ducts and pores thereof, before issuing from the outlet or downstream portion. In this case, the housing may fit snugly around the body so that there is a substantially airtight seal between the outer surface of the body and the inner surface of the housing, and so that no more than a negligible proportion of any exhaust gases entering the inlet or upstream portion can flow from the inlet or upstream portion to the outlet or downstream portion without passing through the interior of the body.

In one embodiment of the invention, the centrally disposed axes through the inlet or upstream portion and outlet or downstream portion are parallel, i.e. the inlet or upstream portion and the outlet or downstream portion are in parallel spaced planes, with the direction of the passages of the body being at an angle of less than 180 ° to the centrally disposed axis through the inlet or upstream portion and to the centrally disposed axis through the outlet or downstream portion. The angle may be between about 90 ° and about 175 °, typically between about 135 ° and about 175 °, e.g. about 155 °.

The treatment device may be a diesel particulate trap.

The wall-flow body of the treatment device may support a catalyst for promoting combustion of diesel particulate material trapped by the body, and may thus form part of a core as hereinbefore described.

In addition to being capable of functioning as a trap, whether catalytic or not, for diesel particulate control, the treatment device may also be capable of functioning as a catalytic converter for the conversion of undesirable gaseous pollutants in combustion gases from an internal combustion engine exhaust.

The body may thus support a catalyst for the treatment of combustion gases, and, optionally, a catalyst for the combustion of diesel particulate material. Instead, the treatment device may include two (or more) cores arranged in series, one core including a catalyst for the conversion of gaseous pollutants, and one core optionally including a catalyst for the combustion of diesel particulate material. Typically, the core with the catalyst for the conversion of gaseous pollutants is upstream of the other core. Advantageously, this arrangement can allow for the generation of nitrogen dioxide in the upstream core; which nitrogen dioxide can then be used to react with trapped soot in the downstream core, continuously at temperatures above about 250 °C, to give carbon dioxide. The treatment device may thus be a so-called continuously regenerating trap (CRT). At least one of the cores will be a core as hereinbefore described. One of the cores, typically the core including a catalyst for the conversion of gaseous pollutants, may be a core that comprises a flow-through body with a multiplicity of open-ended unrestricted passages extending from one end of the body to another end of the body.

Although the porous wall-flow body of the invention can be made by many known processes such as by moist consolidation, e.g. extrusion, of a more or less mono-sized particulate material, it is contemplated that a more preferred mode of forming of the wall-flow body or body elements would be a moulding process, possibly making use of a liquid and/or a solid binder. By using a moulding process with suitable moulds, the body can be moulded with passages which are blocked at one end thereof, obviating the need subsequently to block the passages, as is necessary with an extrusion. A moulding process will also allow passages to be produced with a varying cross-sectional area, e.g. tapered passages. This is also not possible with an extrusion process. Catalyst deposition, which may be effected in any suitable fashion, such as from a solution or from the gas phase, or by means of the sol/gel method, may be carried out before or after sintering of the body, so as to deposit catalyst both in the porous interior of the body and also on the surface of the passages extending along the interior of the body.

Instead of making use of a casting or moulding process, the porous body can be formed using the well-known cold compact process with or without a transient pore-forming agent, such as fibres or spheres of a plastics material such as organic polymer materials, e.g. silicone compositions, polypropylene or polystyrene, and subsequent sintering, and so-called no-pressure sintering methods.

Dependent on the specific particulate material of the porous body, the material may be bonded together directly, e.g. by the application of pressure or heat, e.g. heat generated by means of electric current, or simply by heating the material, or alternatively or additionally be bonded together by means of a binder. Many suitable binders are known to those skilled in the art, such as elastomeric, thermoplastic or synthetic polymeric materials or resin-basis binders. Alternatively, the binder may be a metal such as molybdenum, tin, a metal produced by reduction of a metal salt, a metal salt or a metal oxide, which is provided e.g. by a chemical treatment of the surface of the particulate metal material, as the material is bonded together in the porous body. Further alternatively or additionally, the binder may be a silicate, such as clay or hydrated aluminium silicate or other metal silicate compositions, e.g. potassium or sodium silicate, which is a binder well-known in the art. A further possible binder is a silicic acid ester, particularly when the porous body comprises SiC.

When the particulate material is bonded together in a sintering process, the sintering process is preferably carried out in a reducing atmosphere such as a hydrogen atmosphere or in vacuum in order substantially to eliminate the generation of oxides in the material in question at the surfaces of the particulate metal or other material to be sintered. Furthermore or additionally, the particulate material may be compacted prior to the sintering process by applying pressure to the material in a so-called isostatic pressing in which process heat may further be applied to the material.

The invention will now be described, by way of example, with reference to the accompanying drawings, in which

Figure 1 shows a three-dimensional, partially cut away top view of one embodiment of a treatment device not forming part of the claimed invention, for the treatment of exhaust gases from an internal combustion engine;

Figure 2 shows a side view of the device of Figure 1;

Figure 3 shows a bottom plan view of the device of Figure 1;

Figure 4 shows an end view of the device of Figure 1;

Figure 5 shows a longitudinal section (viewed from the bottom) of the device of Figure 1;

Figure 6 shows an enlarged sectional view of a portion of a core of the device of Figure 1;

Figure 7 shows a transverse section through the core of Figure 6;

Figure 8 shows a transverse section through another embodiment of a core not forming part of the claimed invention;

Figure 9 shows a longitudinal section (viewed from the bottom) of another embodiment of a treatment device not forming part of the claimed invention for treating exhaust gases of an internal combustion engine;

Figure 10 shows a longitudinal section through a further embodiment of a treatment device not forming part of the claimed invention for treating exhaust gases of an internal combustion engine;

Figure 11 shows a three-dimensional view of an embodiment of a porous wall-flow body in accordance with the invention;

Figure 12 shows a longitudinal section through an embodiment of a treatment device in accordance with the invention, for the treatment of exhaust gases from an internal combustion engine;

Figure 13 shows a longitudinal section through a further embodiment of a treatment device in accordance with the invention, for the treatment of exhaust gases from an internal combustion engine; and

Figure 14 shows a perspective view of another embodiment of a porous wall-flow body in accordance with the invention.

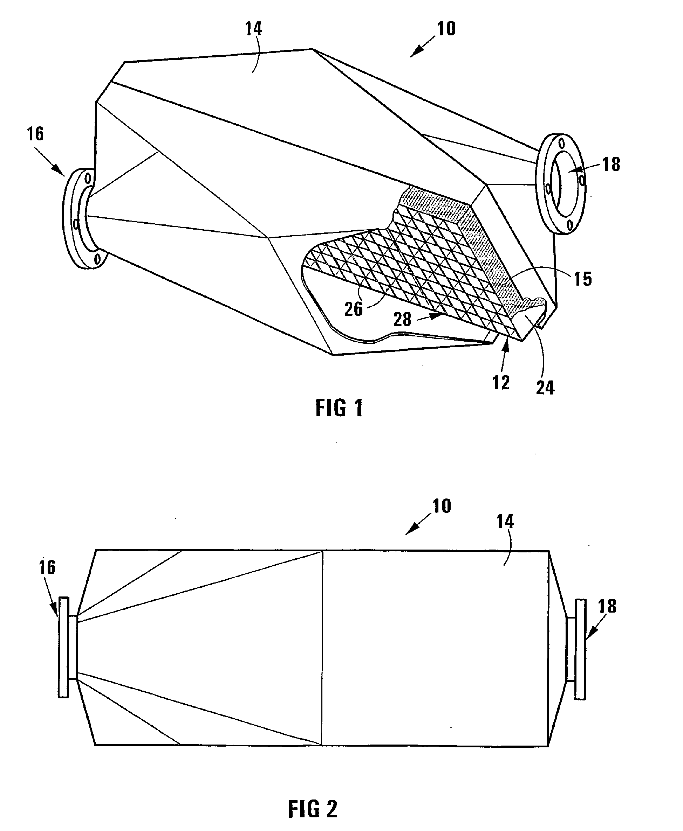

Referring to Figures 1 to 5 of the drawings, reference numeral 10 generally designates a treatment device for the treatment of exhaust gases from an internal combustion engine. The device 10 includes, broadly, a core 12 and a housing 14.

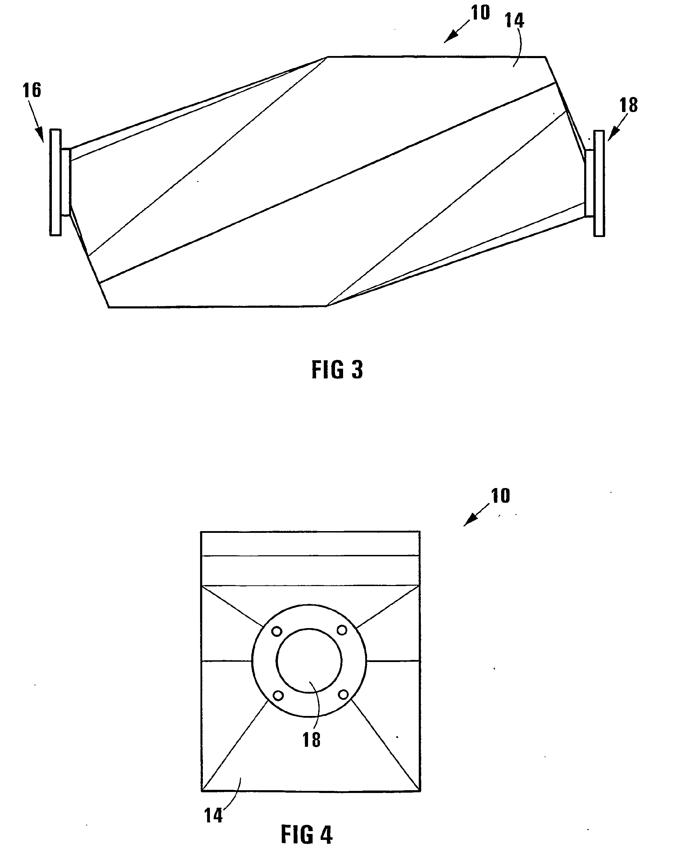

The housing 14 is of steel of the type typically employed for internal combustion engine silencers. The housing 14 includes a flanged exhaust gas inlet 16 spaced from a flanged exhaust gas outlet 18. The housing 14 further comprises an inlet chamber 20 into which the inlet 16 leads, and an outlet chamber 22, from which the outlet 18 leads, the inlet chamber 20 and the outlet chamber 22 being separated by the core 12. As can be clearly seen in Figures 1 and 3 of the drawings, the inlet chamber 20 and the outlet chamber 22 taper in end regions thereof remote from the inlet 16 and the outlet 18 respectively.

The inlet 16 and the outlet 18 are located in spaced parallel vertical planes, but are in the same horizontal plane when the treatment device 10 is viewed in side view, as shown in Figure 2. In bottom plan view, as shown in Figure 3 of the drawings, the inlet 16 and the outlet 18 are not aligned. However, it is to be appreciated that the treatment device 10 can be used in any orientation, e.g. as shown in Figure 2 of the drawings, on its side, or even vertical.

The core 12 comprises a porous wall-flow monolith 24 in the form of a rectangular panel or slab. The monolith 24 is of a material or of an admixture of materials rendering the thermal conductivity of the monolith in excess of that of a pure ceramic monolith such as a cordierite monolith, e.g. about 20 W/mK. It is however to be appreciated that, depending on operating conditions, a purely ceramic material may be used for the core 12. The monolith 24 fits snugly in airtight fashion inside the housing 14. A ceramic sealing felt 15 forms a seal between the monolith 24 and the housing 14.

The monolith 24 has a plurality of passages 26 extending along its interior in a direction that extends from an inlet end or inlet surface 28 of the monolith 24 towards an outlet end or outlet surface 30 of the monolith 24.

The monolith 24 has a length or thickness, measured in the direction of the passages 26 of about 50 mm. The inlet end or surface 28 has dimensions of 102 mm x 514 mm providing an actual and projected area for the inlet end 28 of 52428 mm$^2$. Accordingly, the ratio of the length or thickness of the monolith 24 to the volume of the monolith 24 is about 1 : 52428 mm$^{-2}$.

The passages 26 extend parallel to one another and perpendicular to the inlet end or surface or face 28 and the outlet end or outlet surface or face 30. The passages 26 are evenly spaced from one another.

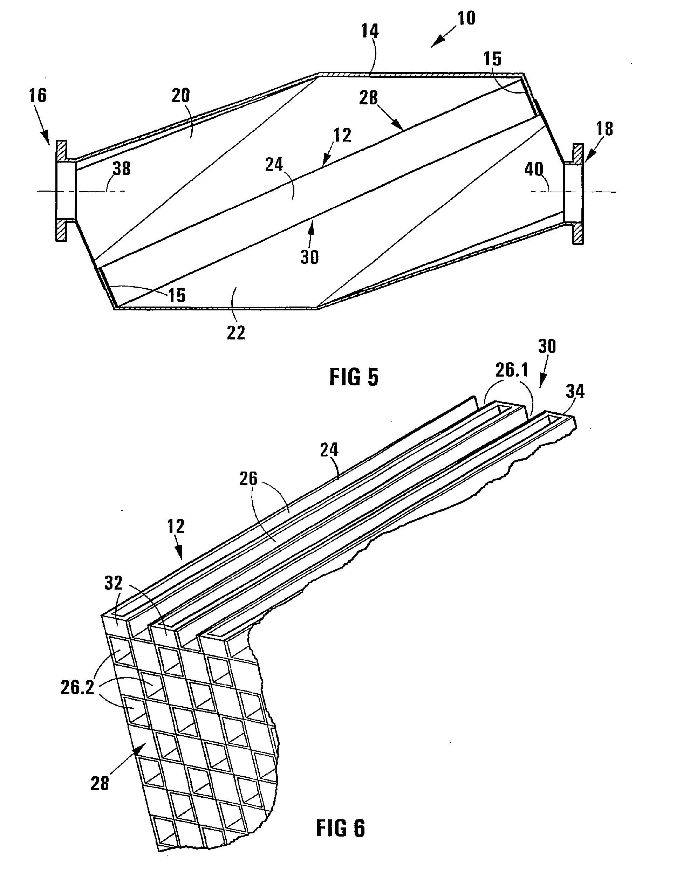

Half the passages 26, designated 26.1 in the enlarged view of Figure 6 showing details of Figure 1, open out of the outlet end or outlet surface 30 of the monolith 24. The remaining half of the passages 26, designated 26.2 in Figure 6, open out of the inlet end or surface 28 of the monolith 24. The upstream ends of the passages 26.1 are blocked or closed off by porous end walls 32 of the monolith 24. The downstream ends of the passages 26.2 are similarly closed off by porous end walls 34 of the monolith 24.

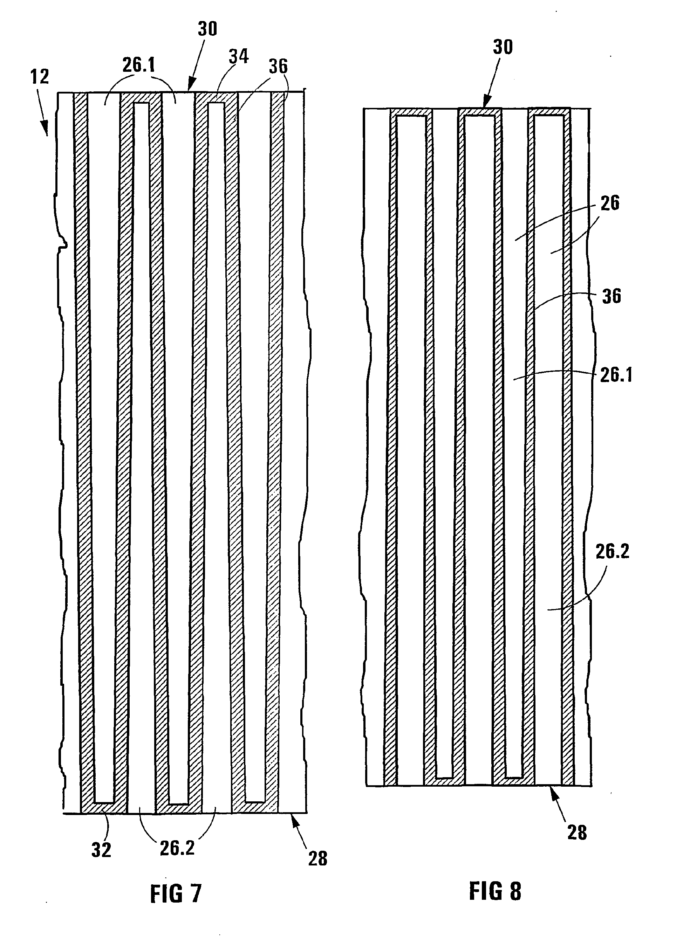

The passages 26 are square in cross-section and are arranged in a square grid arrangement. As can be clearly seen in Figure 7 of the drawings, the passages 26.2 taper in a downstream direction, whereas the passages 26.1 widen in a downstream direction. Side walls 36 separating adjacent passages 26 have a constant thickness along their length. In the embodiment shown in the drawings, this thickness is about 0.43 mm. The passage spacing and passage sizing thus provide a passage density of about 1 cell/passage per 6.45 mm$^2$.

The passages 26.1 and 26.2, at their widest, have a cross-sectional area of about 4.445 mm$^2$. Where they are at their narrowest, the passages 26.1 and 26.2 have a cross-sectional area of about 1.545 mm$^2$.

The passages 26.1, 26.2 are arranged so that, in general, each passage 26.1 is more or less surrounded on four sides by passages 26.2, and so that each passage 26.2 is more or less surrounded on four sides by passages 26.1, although this result naturally, cannot be fully achieved adjacent an outer circumferential surface of the monolith 24 which is sealed by the sealing felt 15 to the housing 14.

The porous interior of the monolith 24 is occupied by open interconnected pores in the form of microscopic passages or channels (not shown), having a pore size of about 20 $\mu$m, the monolith 24 as a whole having a percentage porosity of about 50 %.

The direction of the passages 26 of the monolith 24 is at an angle to a centrally disposed axis 38 through the exhaust gas inlet 16 and also at an angle to a centrally disposed axis 40 through the exhaust gas outlet 18 (see Figure 5 of the drawings). This arrangement advantageously allows the treatment device 10 to be compact and also has substantial advantages relating to heat radiation from the monolith 24 to its environment.

The treatment device 10 may be a catalytic converter, and as such, the core 12 then contains, both on the porous surfaces of the passages 26, out of which the porous interior of the monolith 24 opens, and also in the actual pores of the porous interior of the monolith 24, catalytic sites formed by a platinum/rhodium catalyst deposited in said pores and on said porous surfaces of the passages 26. Catalyst deposition can be effected in conventional fashion, at a catalytic site density that is suitable for the intended purpose of the catalytic converter. Such a catalytic converter is suitable for use in the exhaust system of an internal combustion engine of the petrol or gasoline derived type, to catalytically convert undesirable components of exhaust gases of such an engine into a less undesirable form.

Instead of being a catalytic converter, the treatment device 10 may be in the form of a catalytic trap for diesel particulate control. The core 12 will thus include a suitable catalyst for promoting combustion of diesel particulate material trapped by the monolith at typical diesel exhaust temperatures of about 150 °C to 500 °C. Again, the catalyst will be supported on the surfaces of the pores in the porous interior of the monolith 24 and also on the surfaces of the passages 26 extending along the interior of the monolith 24.

In use, internal combustion engine exhaust gases to be treated enter the housing 14 of the device 10 through the inlet 16. The gases enter the core 12 via the open upstream ends of the passages 26.2 in the inlet end 28 before flowing in a direction transverse to the passages 26, through the porous material between the passages 26, into the passages 26.1 opening out of the outlet end 30 of the core 12, from which passages 26.1 they issue into the outlet chamber 22 of the housing 14 prior to issuing from the housing 14 via the outlet 18. Intimate contact between the exhaust gases and the material of the core 12 takes place, promoting contact of the exhaust gases with the catalytic sites and promoting effective catalytic conversion of undesirable combustion products in the exhaust gases to more desirable combustion products such as carbon dioxide and water. When the treatment device 10 is a soot trap, the core 12 traps the diesel particulate material, which is then catalytically combusted at the operating temperature of the soot trap.

Referring to Figure 8 of the drawings, the passages 26 of another embodiment of a monolith are illustrated. Unlike the passages 26.2 of Figure 7, the square passages 26.2 of Figure 8 have a constant cross-sectional area along their length. However, the passages 26.1 of Figure 8 are similar to the passages 26.1 of Figure 7, having a smaller cross-sectional area at their closed ends and gradually becoming wider towards their open ends. As can be seen in Figure 8 of the drawings, this arrangement causes the side walls 36 of the passages 26 of the monolith of Figure 8 to be thicker closer to the inlet end or inlet surface 28, gradually becoming thinner towards the outlet end or outlet surface 30. This arrangement may naturally also be reversed if desired.

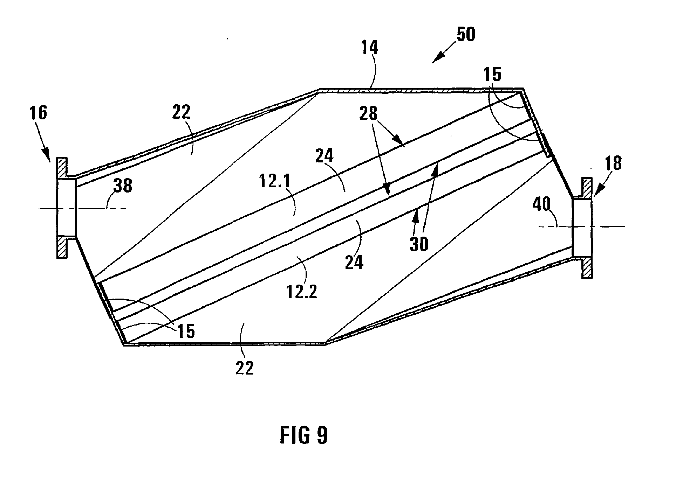

Referring to Figure 9 of the drawings, a treatment device in the form of a so-called continuously regenerating trap (CRT) is generally designated by reference numeral 50. The trap 50 is similar to the treatment device 10 and operates in a similar fashion and, unless otherwise indicated, the same reference numerals are used to indicate the same or similar parts or features.

A major difference between the trap 50 and the treatment device 10 is that the trap 50 includes two cores 12.1 and 12.2. The cores 12.1, 12.2 are similar to the core 12 of the treatment device 10. However, the core 12.1 includes a catalyst for the conversion of gaseous pollutants. In order to suppress the trapping of particulate material in the core 12.1, the passages of the core 12.1 are throttled and not completely blocked at the outlet end or surface 30, and/or the monolith 24 of the core 12.1 has a mean pore size of greater than about 40 $\mu$m, e.g. between about 40 $\mu$m and about 50 $\mu$m, allowing most diesel particulate material to pass through without being trapped. The monolith 24 of the core 12.1 is also thicker than the monolith 24 of the core 12.2, respectively being about 60 mm and about 40 mm thick. The cores 12.1, 12.2 are arranged with the outlet end or outlet surface 30 of the core 12.1 spaced from the inlet end or inlet surface 28 of the core 12.2. The core 12.1 with the catalyst for the conversion of gaseous pollutants is thus upstream of the core 12.2. This arrangement allows for the generation of nitrogen dioxide in the upstream core 12.1. The nitrogen dioxide thus formed in the upstream core 12.1 can be used to combust soot trapped in the downstream core 12.2. This combustion can be continuous at temperatures above about 250 °C, forming carbon dioxide in the core 12.2.

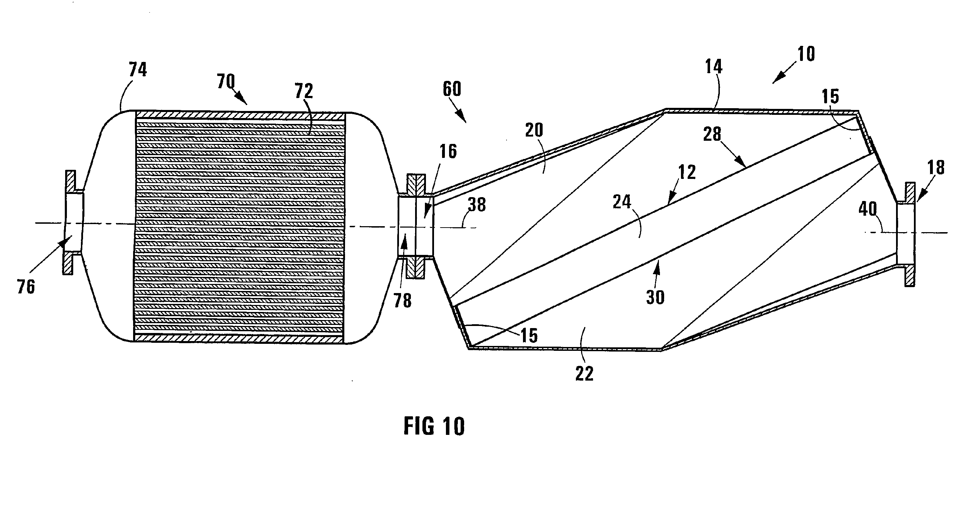

Referring to Figure 10 of the drawings, a treatment device, also in the form of a continuously regenerating trap, is generally designated by reference numeral 60. The trap 60 operates in a similar fashion to the trap 50.

The trap 60 comprises the treatment device 10, in the form of a trap for diesel particulate control, connected to a catalytic converter 70. The catalytic converter 70 is a conventional catalytic converter comprising a flow-through ceramic body 72 with a multiplicity of open-ended unrestricted passages extending from one end of the ceramic body 72 to another end of the ceramic body 72. A platinum catalyst is present on interior surfaces of the passages extending through the body 72 and in use oxidises hydrocarbons and carbon monoxide, in diesel exhaust gas, and also nitric oxide to nitrogen dioxide, which is used to oxidise soot retained by the monolith 24 of the trap 10.

As mentioned hereinbefore, the ceramic body 72 is a conventional ceramic body as used in a conventional catalytic converter, and is thus an elongate cylindrical body with dimensions that differ drastically from the dimensions of the monolith 24 of the trap 10. The body 72 is housed in a housing 74 with an inlet 76 and an outlet 78.

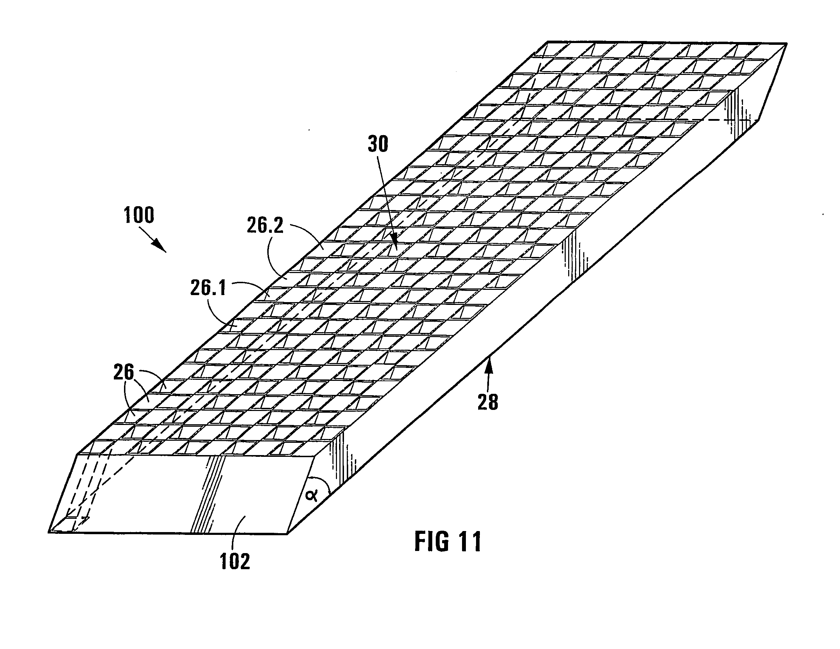

Referring to Figure 11 of the drawings, an embodiment of a porous wall-flow body in accordance with the invention is generally indicated by reference numeral 100. The porous wall-flow body 100 is suitable for use in the treatment of exhaust gases from an internal combustion engine and is similar to the porous wall-flow monolith 24 of Figure 1. Thus, the body 100 also has a plurality of passages 26 extending along its interior in a direction that extends from an inlet end or face or inlet surface 28 towards an outlet end or outlet surface or face 30 of the body 100. The passages 26 extend parallel to one another and each passage 26 has a length of about 50 mm. However, unlike the monolith 24, the passages 26 of the body 100 are non-perpendicular to the parallel faces 28, 30. In other words, a centrally disposed longitudinal axis through an inlet of a passage 26 is non-perpendicular to at least one tangent to the face 28 which tangent intersects the central longitudinal axis of the passage 26.

As is the case with the monolith 24, half the passages 26, designated 26.1, open out of the outlet end or outlet surface or face 30 of the body 100. The remaining half of the passages 26, designated 26.2, open out of the inlet end or surface or face 28 of the body 100. The upstream ends of the passages 26.1 are blocked or closed off and the downstream ends of the passages 26.2 are similarly closed off. The passages 26 of the body 100 are square in cross-section and are arranged in a square grid arrangement. The passages 26.2 taper in a downstream direction, whereas the passages 26.1 widen in a downstream direction.

The body 100 is a ceramic body. However, it is to be appreciated that many other suitable materials exist for use in a porous wall-flow body such as the body 100, which can be used in the treatment of exhaust gases from an internal combustion engine.

In side view, the body 100 has an outline corresponding to the outline of a parallelogram with no right angle corners. The body 100 has a length which is larger than its width. An angle $\alpha$ between the face 28 and an end surface 102 is about 35° This angle of 35 ° is thus also the angle between a centrally disposed longitudinal axis through an inlet of a passage 26 and a tangent to the gas inlet face 28 which intersects the central longitudinal axis.

The volume of the porous wall-flow body 100 is the same as the volume of the monolith 24. The number of passages 26 of the body 100 also equals the number of passages 26 of the monolith 24. Furthermore, the cross-sectional areas of the passages 26, and the wall thicknesses of the passages 26, are identical between the body 100 and the monolith 24. However, the inlet face 28 and the outlet face 30 of the body 100 are approximately 68 % larger than the corresponding faces of the monolith 24. This is advantageous from a heat radiation point of view.

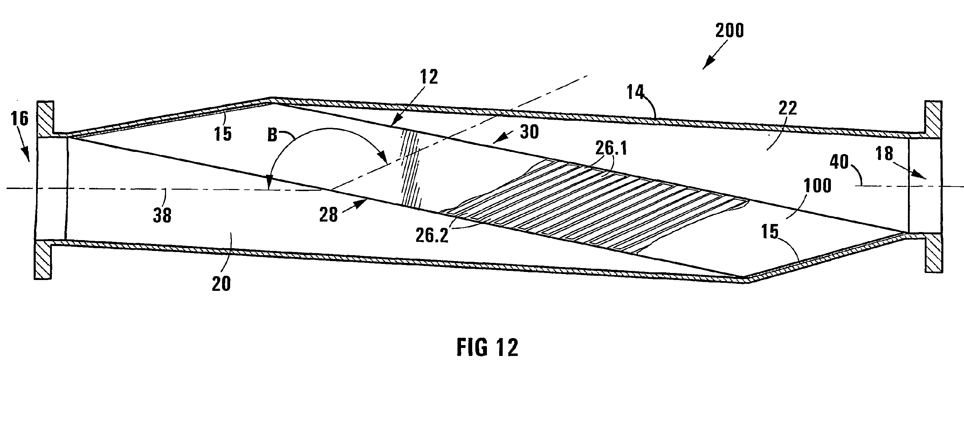

The porous wall-flow body 100 is particularly, though not necessarily exclusively, suitable for use as a core of a catalytic trap for diesel particulate control. Figure 12 shows a treatment device, in the form of a particulate trap for diesel particulate control, which includes the porous wall-flow body 100 as a core 12. In Figure 12, the diesel trap is generally indicated by reference numeral 200.

The trap 200 is similar to the treatment device 10 of Figure 1. The same reference numerals are thus used to indicate the same or similar parts or features.

A distinct difference between the trap 200 and the treatment device 10 is however that an angle β between the direction of the passages 26 of the body 100 and a centrally disposed axis 38 through a flanged exhaust gas inlet 16 is closer to 180 ° than is the case for the treatment device 10. For the trap 200 shown in Figure 12, the angle β is about 155 °. This increase in the angle β is a result of the particular orientation of the passages 26 of the body 100 and has the advantage that entrance and exit pressure losses through the passages 26 are lower for the trap 200 than for the treatment device 10. An additional advantage of the trap 200 is that, because of the increase in the areas of the faces 28, 30, heat radiation from the faces 28, 30 is improved compared to that of the monolith 24. This is expected to improve the thermal shock resistance of the body 100, compared to the monolith 24.

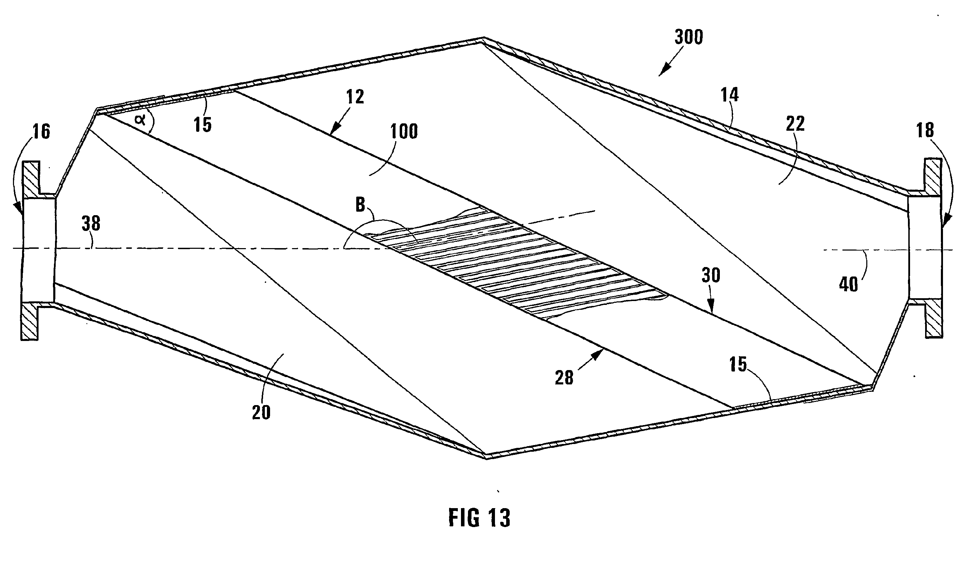

Referring to Figure 13 of the drawings, reference numeral 300 shows yet a further embodiment of a particulate trap in accordance with the invention for diesel particulate control, which includes the porous wall-flow body 100 as a core 12. The trap 300 is similar to the trap 200 and unless otherwise indicated, the same reference numerals are used to indicate the same or similar parts or features.

In the trap 300, the angle β is even closer to 180 ° than the angle β of the trap 200, being about 175 °. However, as illustrated in Figure 13, this is achieved at the cost of compactness, the trap 300 thus being more bulky than the trap 200.

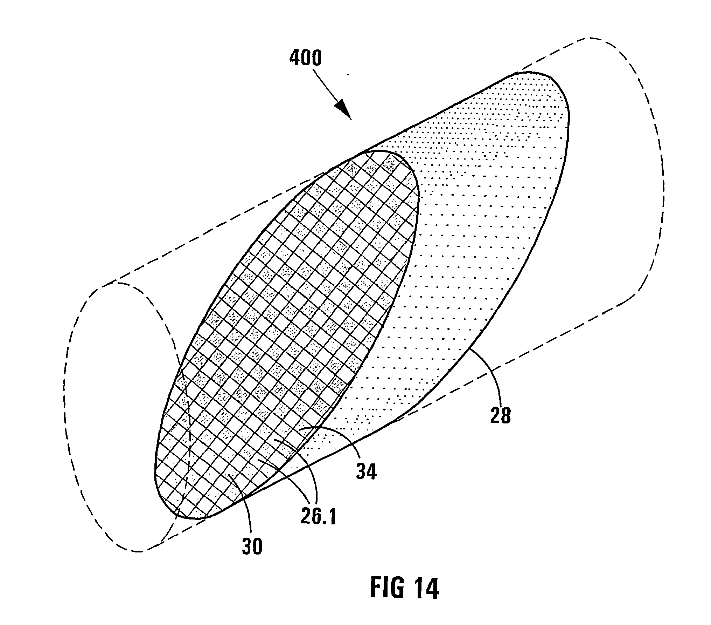

Referring to Figure 14 of the drawings, another embodiment of a porous wall-flow body in accordance with the invention is generally indicated by reference numeral 400. In principle, the wall-flow body 400 is similar to the monolith 24 and the same reference numerals are used to indicate the same or similar parts or features.

As can be seen in Figure 14 of the drawings, the wall-flow body 400 is in essence circular cylindrical with truncated or slanted inlet and outlet faces 28, 30, which are parallel to each other. As a result of an end view outline of the body 400 being circular cylindrical, the body 400 can be housed in a circular cylindrical housing, such as a length of pipe, shown in broken lines in Figure 14, to form a treatment device. The inlet and outlet faces 28, 30 are thus non-perpendicular to a centrally disposed axis through upstream and downstream portions of the housing and when projected onto the housing along an axis perpendicular to the face 28 and the face 30 respectively, covers an interior curved surface area of the housing which is larger than the area of the face 28, 30 itself. This is expected advantageously to enhance radiant heat exchange between the faces 28, 30 and the housing. The treatment device may include a gas inlet and a gas outlet, which may be coaxial with but of reduced diameter relative to the pipe shown in broken lines. Instead, the gas inlet and the gas outlet may be angled relative to a central longitudinal axis of the pipe shown in broken lines in order to minimise directional changes in the flow of gas into and out of the body 400.

Treatment devices for the treatment of combustion gases from internal combustion engines, and more particularly the cores, whether catalytic or not, of such treatment devices when used as a soot trap, must meet four basic requirements, which are:

(1) adequate filtration efficiency to satisfy particulate emissions legislation;
(2) low pressure drop to minimise fuel penalty and conserve engine power;
(3) high thermal shock resistance or high thermal conductivity or radiation capability to ensure filter integrity during soot regeneration; and
(4) high surface area per unit volume for compact packaging.

The Applicant believes that the porous wall-flow body of the invention, and the treatment device of the invention, as illustrated in Figures 11 to 14, meet these requirements exceptionally well, although certain illustrated embodiments emphasise some of these requirements more than others. Especially as far as the requirement of low pressure drop and high thermal shock resistance are concerned, the slab-like porous body and the treatment device of the invention incorporating it excel compared to prior art devices of which the Applicant is aware, such as treatment devices making use of elongate cylindrical purely ceramic wall-flow monoliths with parallel transverse faces. The geometry of the porous body of the invention provides relatively large exhaust gas entrance and exit faces, which faces of the porous body can act as radiation surfaces further to limit the local temperature rise inside the porous body. This advantage is increased when these radiation surfaces are facing, albeit at an oblique angle, colder walls of the treatment device in heat exchange relationship with the environment. The treatment device of the invention, as illustrated, thus shows a particularly important benefit as far as the controlling of the temperature of the porous wall-flow body is concerned. As will be appreciated by those skilled in the art, in order for the catalytic action of a catalytic converter to take place effectively, it is important that the converter reaches a suitable temperature (the so-called light-off temperature) as quickly as possible after an internal combustion engine has been started. Typically, the housing of the treatment device of the invention is of a metal, which heats up much faster than the wall-flow body which in many cases is expected to be of a ceramic material. As a result of the orientation of the relatively large exhaust gas entrance and exit faces to the facing walls of the housing, and the typically large curved surface area of the housing exposed to these faces, during start-up, the housing acts to speed up the radiant heating of the porous wall-flow body. In contrast, once operating temperature has been reached, and in particular in the case of a treatment device in which the wall-flow body supports a catalyst for promoting combustion of diesel particulate material trapped by the body, it is important to remove heat from the wall-flow body to protect the catalyst and the wall-flow body. During these conditions, the large exhaust gas entrance and exit faces act as radiation surfaces which are advantageously orientated to face the colder walls of the housing, thus removing heat from the wall-flow body. In the treatment device of the invention, as illustrated in Figure 14, the surface area of the housing involved in radiant heat exchange with the wall-flow body is typically larger compared to that of the prior art devices, is curved and is also better orientated when compared to the prior art devices.

**Claims**

1. A porous wall-flow body (100, 400) suitable for use in the treatment of exhaust gases from an internal combustion engine, the body having a plurality of passages (26) extending along its interior between a gas inlet end or face (28) of the body and a gas outlet end or face (30) of the body, a centrally disposed longitudinal axis through an opening in the outlet end or face (30) into at least one of the passages (26) being non-perpendicular to at least one tangent to said outlet face (30) which intersects the centrally disposed longitudinal axis, **characterised in that** an acute angle between the centrally disposed longitudinal axis and the tangent is 70° or less.

2. A porous wall-flow body (100, 400) as claimed in claim 1, in which the acute angle is between 45 ° and 25 °.

3. A porous wall-flow body (100, 400) as claimed in claim 1 or claim 2, in which the passages (26) have a maximum length of 110 mm.

4. A porous wall-flow body (100, 400) as claimed in any one of the preceding claims, in which a maximum length of the passages (26) and the volume of the body (100, 400) are such that the ratio of the maximum length to the volume is at least $1 : 5000 \text{ mm}^{-2}$.

5. A porous wall-flow body (100, 400) as claimed in claim 4, in which the ratio of the maximum length to the volume is in a range between $1 : 5000 \text{ mm}^{-2}$ and $1 : 120000 \text{ mm}^{-2}$.

6. A porous wall-flow body (100, 400) as claimed in claim 5, in which the ratio is between $1 : 10000 \text{ mm}^{-2}$ and $1 : 60000 \text{ mm}^{-2}$.

7. A porous wall-flow body (100, 400) as claimed in any one of the preceding claims, which has a thermal conductivity of at least 5 W/mK.

8. A porous wall-flow body (100, 400) as claimed in any one of the preceding claims, in which the gas inlet end or face (28) and the gas outlet end or face (30) are planar, with all the passages (26) being arranged non-perpendicular to the faces (28, 30).

9. A porous wall-flow body (100, 400) as claimed in claim 8, in which the inlet face (28) and the outlet face (30) are parallel, with all the passages (26) being linear, parallel blocked passages.

10. A porous wall-flow body (100, 400) as claimed in any one of the preceding claims, in which the length of the passages (26) is between 10 mm and 100 mm.

11. A porous wall-flow body (100, 400) as claimed in claim 10, in which the length of the passages (26) is between 20 mm and 80 mm.

12. A porous wall-flow body (100, 400) as claimed in any one of the preceding claims, in which at least some of the passages (26) are tapered.

13. A porous wall-flow body (100, 400) as claimed in any one of the preceding claims, which is a moulded body.

14. A core (12) for a catalytic converter, **characterised in that** the core comprises a porous wall-flow body (100, 400) as claimed in any one of claims 1 to 13 inclusive, and a suitable catalyst for the conversion of undesirable pollutants in combustion gases from internal combustion engine exhausts, the catalyst being supported by the body (100, 400).

15. A core (12) for a catalytic trap for diesel particulate control, **characterised in that** the core comprises a porous wall-flow body (100, 400) as claimed in any one of claims 1 to 13 inclusive, and a suitable catalyst for promoting combustion of diesel particulate material trapped by the body (100; 400), the catalyst being supported by the body (100, 400).

16. A treatment device (200) for the treatment of exhaust gases from an internal combustion engine, **characterised in that** the device includes a porous wall-flow body (100, 400) as claimed in any one of claims 1 to 13 inclusive, located in a housing (14) having an exhaust gas inlet (16) or upstream-portion and an exhaust gas outlet (18) or downstream portion.

17. A treatment device (200) as claimed in claim 16, in which the direction of the passages (26) of the body is at an angle of 180 ° or less to a centrally disposed axis (38) through the exhaust gas inlet (16) or upstream portion and/or to a centrally disposed axis (40) through the exhaust gas outlet (18) or downstream portion.

18. A treatment device (200) as claimed in claim 17, in which the angle between the direction of the passages (26) of the body (100, 400) and a centrally disposed axis (38) through the exhaust gas inlet (16) or upstream portion and/or to a centrally disposed axis (40) through the exhaust gas outlet (18) or downstream portion is between 90 ° and 175°.

19. A treatment device (200) as claimed in any one of claims 16 to 18 inclusive, which is a diesel particulate trap.

20. A treatment device (200) as claimed in claim 19, in which the wall-flow body (100, 400) of the treatment device (200) supports a catalyst for promoting combustion of diesel particulate material trapped by the body (100, 400).

21. A treatment device (200) as claimed in claim 19, which, in addition to being capable of functioning as a trap, whether catalytic or not, for diesel particulate control, is also capable of functioning as a catalytic converter for the conversion of undesirable gaseous pollutants in combustion gases from an internal combustion engine exhaust.

22. A treatment device as claimed in claim 21, which includes at least two cores arranged in series, one core including a catalyst for the conversion of gaseous pollutants, and one core optionally including a catalyst for the combustion of diesel particulate material, at least one of the cores comprising said wall-flow body (100, 400) as claimed in any one of claims 1 to 13 inclusive.

23. A treatment device as claimed in claim 22, in which at least one of the cores comprises a flow-through body with a multiplicity of open-ended unrestricted passages extending from one end of the body to another end of the body.

24. A treatment device (200) as claimed in any one of claims 16 to 23 inclusive, in which the gas inlet face (28) and/or the gas outlet face (30) of the porous wall-flow body (100, 400), when projected onto the housing (14) along an axis perpendicular to the face (28, 30) itself, covers an interior surface area of the housing (14) which is larger than the area of the face (28, 30) itself, thereby to enhance radiant heat exchange between the gas inlet face (28) and/or gas outlet face (30) and the housing (14).

25. A treatment device (200) as claimed in claim 24, in which at least one of the inlet face (28) or outlet face (30) of the body (100, 400) is non-perpendicular respectively to a centrally disposed axis (38, 40) through the exhaust gas inlet (16) or upstream portion or the exhaust gas outlet (18) or downstream portion.

**Patentansprüche**

1. Poröser Wandstromkörper (100, 400), der zur Verwendung in der Behandlung von Abgasen aus einem Verbrennungsmotor geeignet ist, wobei der Körper mehrere Kanäle (26) ausweist, die sich entlang seines Inneren zwischen einem/einer Gaseintrittsende oder -fläche (28) des Körpers und einem/einer Gasaustrittsende oder -fläche (30) des Körpers erstrecken, eine durch eine Öffnung in dem/der Austrittsende oder -fläche (30) in mindestens einem der Kanäle (26) zentral angeordnete Längsachse, die nicht orthogonal zu mindestens einer Tangente der Austrittsfläche (30) ist, welche die zentral angeordnete Längsachse schneidet, **dadurch gekennzeichnet, dass** ein spitzer Winkel zwischen der zentral angeordneten Längsachse und der Tangente 70° oder weniger beträgt.

**2.** Poröser Wandstromkörper (100, 400) nach Anspruch 1, worin der spitze Winkel zwischen 45° und 25° beträgt.

**3.** Poröser Wandstromkörper (100, 400) nach Anspruch 1 oder Anspruch 2, worin die Kanäle (26) eine maximale Länge von 110 mm aufweisen.

**4.** Poröser Wandstromkörper (100, 400) nach einem der vorstehenden Ansprüche, worin eine maximale Länge der Kanäle (26) und das Volumen des Körpers (100, 400) derart sind, dass das Verhältnis der maximalen Länge zu dem Volumen mindestens 1 : 5000 mm$^{-2}$ ist.

**5.** Poröser Wandstromkörper (100, 400) nach Anspruch 4, worin das Verhältnis der maximalen Länge zu dem Volumen in einem Bereich zwischen 1 : 5000 mm$^{-2}$ und 1 : 120000 mm$^{-2}$ liegt.

**6.** Poröser Wandstromkörper (100, 400) nach Anspruch 5, worin das Verhältnis zwischen 1 : 10000 mm$^{-2}$ und 1 : 60000 mm$^{-2}$ liegt.

**7.** Poröser Wandstromkörper (100, 400) nach einem der vorstehenden Ansprüche, der eine Wärmeleitfähigkeit von mindestens 5 W/mK aufweist.

**8.** Poröser Wandstromkörper (100, 400) nach einem der vorstehenden Ansprüche, worin das/die Gaseintrittsende oder -fläche (28) und das/die Gasaustrittsende oder -fläche (30) eben sind, wobei alle die Kanäle (26) nicht orthogonal zu den Flächen (28, 30) angeordnet sind.

**9.** Poröser Wandstromkörper (100, 400) nach Anspruch 8, worin die Eintrittsfläche (28) und die Austrittsfläche (30) parallel sind, wobei alle die Kanäle (26) lineare, parallel versetzte Kanäle sind.

**10.** Poröser Wandstromkörper (100, 400) nach einem der vorstehenden Ansprüche, worin die Länge der Kanäle (26) zwischen 10 mm und 100 mm beträgt.

**11.** Poröser Wandstromkörper (100, 400) nach Anspruch 10, worin die Länge der Kanäle (26) zwischen 20 mm und 80 mm beträgt.

**12.** Poröser Wandstromkörper (100, 400) nach einem der vorstehenden Ansprüche, worin mindestens einige der Kanäle (26) verjüngt sind.

**13.** Poröser Wandstromkörper (100, 400) nach einem der vorstehenden Ansprüche, der ein geformter Körper ist.

**14.** Kern (12) für einen katalytischen Wandler, **dadurch gekennzeichnet, dass** der Kern einen porösen Wandstromkörper (100, 400) nach einem der Ansprüche 1 bis einschließlich 13 und einen geeigneten Katalysator für die Umwandlung unerwünschter Schadstoffe in Verbrennungsgasen von Verbrennungsmotorauslässen umfasst, wobei der Katalysator durch den Körper (100, 400) getragen wird.

**15.** Kern (12) für eine katalytische Falle zur Steuerung von Dieselpartikeln, **dadurch gekennzeichnet, dass** der Kern einen porösen Wandstromkörper (100, 400) nach einem der Ansprüche 1 bis einschließlich 13 und einen geeigneten Katalysator zum Fördern einer Verbrennung von durch den Körper (100, 400) gefangenem Dieselpartikelmaterial umfasst, wobei der Katalysator durch den Körper (100, 400) getragen wird.

**16.** Behandlungseinrichtung (200) für die Behandlung von Abgasen aus einem Verbrennungsmotor, **dadurch gekennzeichnet, dass** die Einrichtung einen porösen Wandstromkörper (100, 400) nach einem der Ansprüche 1 bis einschließlich 13 umfasst, der in einem Gehäuse (14) mit einem Abgaseintritt (16) oder stromaufwärtigen Bereich und einem Abgasaustritt (18) oder stromabwärtigen Bereich lokalisiert ist.

**17.** Behandlungseinrichtung (200) nach Anspruch 16, worin die Richtung der Kanäle (26) des Körpers in einem Winkel von 180° oder weniger zu einer zentral angeordneten Achse (38) durch den Abgaseintritt (16) oder stromaufwärtigen Bereich und/oder zu einer zentral angeordneten Achse (40) durch den Abgasaustritt (18) oder stromabwärtigen Bereich ist.

**18.** Behandlungseinrichtung (200) nach Anspruch 17, worin der Winkel zwischen der Richtung der Kanäle (26) des Körpers (100, 400) und einer zentral angeordneten Achse (38) durch den Abgaseintritt (16) oder stromaufwärtigen Bereich und/oder zu einer zentral angeordneten Achse (40) durch den Abgasaustritt (18) oder stromabwärtigen Bereich zwischen 90° und 175° beträgt.

19. Behandlungseinrichtung (200) nach einem der Ansprüche 16 bis einschließlich 18, welche eine Dieselpartikelfalle ist.

20. Behandlungseinrichtung (200) nach Anspruch 19, worin der Wandstromkörper (100, 400) der Behandlungseinrichtung (200) einen Katalysator zum Fördern einer Verbrennung von durch den Körper (100, 400) gefangenem Dieselpartikelmaterial trägt.

21. Behandlungseinrichtung (200) nach Anspruch 19, welche zusätzlich zur Fähigkeit als eine Falle, ob katalytisch oder nicht, zur Steuerung von Dieselpartikeln zu wirken, ebenfalls geeignet ist als ein katalytischer Wandler für die Umwandlung unerwünschter gasförmiger Schadstoffe in Verbrennungsgasen aus einem Verbrennungsmotorauslass zu wirken.

22. Behandlungseinrichtung nach Anspruch 21, welche mindestens zwei in Reihe angeordnete Kerne umfasst, wobei ein Kern einen Katalysator für die Umwandlung gasförmiger Schadstoffe umfasst, und ein Kern wahlweise einen Katalysator für die Verbrennung von Dieselpartikelmaterial umfasst, wobei mindestens einer der Kerne den Wandstromkörper (100, 400) nach einem der Ansprüche 1 bis einschließlich 13 umfasst.

23. Behandlungseinrichtung nach Anspruch 22, worin mindestens einer der Kerne einen Durchflusskörper mit einer Vielfalt an nicht beschränkten Kanälen mit offenen Enden umfasst, die sich von einem Ende des Körpers zu einen anderen Ende des Körpers erstrecken.

24. Behandlungseinrichtung (200) nach einem der Ansprüche 16 bis einschließlich 23, worin die Gaseintrittsfläche (28) und/oder die Gasaustrittsfläche (30) des porösen Wandstromkörpers (100, 400), wenn sie entlang einer zu der Fläche (28, 30) selbst orthogonalen Achse auf das Gehäuse (14) projiziert wird, einen inneren Oberflächenbereich des Gehäuses (14) bedeckt, der größer ist als der Bereich der Fläche (28, 30) selbst, wobei **dadurch** ein Strahlungswärmeaustausch zwischen der Gaseintrittsfläche (28) und/oder Gasaustrittsfläche (30) und dem Gehäuse (14) verbessert wird.

25. Behandlungseinrichtung (200) nach Anspruch 24, worin mindestens eine der Eintrittsfläche (28) oder Austrittsfläche (30) des Körpers (100, 400) jeweils nicht orthogonal zu einer zentral angeordneten Achse (38, 40) durch den Abgaseintritt (16) oder stromaufwärtigen Bereich oder dem Abgasaustritt (18) oder stromabwärtigen Bereich ist.

**Revendications**

1. Corps poreux à écoulement de paroi (100, 400) prévu pour une utilisation dans le traitement de gaz d'échappement d'un moteur à combustion interne, le corps possédant une pluralité de passages (26) s'étendant le long de son intérieur entre une face ou extrémité d'entrée des gaz (28) du corps et une face ou extrémité de sortie des gaz (30) du corps, un axe longitudinal disposé de façon centrale traversant une ouverture dans la face ou extrémité de sortie (30) dans au moins un des passages (26) étant non perpendiculaire à au moins une tangente à ladite face de sortie (30) coupant l'axe longitudinal disposé de façon centrale, **caractérisé en ce qu'**un angle aigu entre l'axe longitudinal disposé de façon centrale et la tangente est de 70° ou moins.

2. Corps poreux à écoulement de paroi (100, 400) selon la revendication 1, dans lequel l'angle aigu est compris entre 45° et 25°.

3. Corps poreux à écoulement de paroi (100, 400) selon la revendication 1 ou 2, dans lequel les passages (26) ont une longueur maximale de 110 mm.

4. Corps poreux à écoulement de paroi (100, 400) selon l'une quelconque des revendications précédentes, dans lequel une longueur maximale des passages (26) et le volume du corps (100, 400) sont tels que le rapport de la longueur maximale sur le volume est d'au moins 1:5000 mm$^{-2}$.

5. Corps poreux à écoulement de paroi (100, 400) selon la revendication 4, dans lequel le rapport de la longueur maximale sur le volume est compris entre 1:5000 mm$^{-2}$ et 1:120000 mm$^{-2}$.

6. Corps poreux à écoulement de paroi (100, 400) selon la revendication 5, dans lequel le rapport est compris entre 1:10000 mm$^{-2}$ et 1:60000 mm$^{-2}$.

7. Corps poreux à écoulement de paroi (100, 400) selon l'une quelconque des revendications précédentes, possédant une conductivité thermique d'au moins 5 W/mK;

8. Corps poreux à écoulement de paroi (100, 400) selon l'une quelconque des revendications précédentes, dans lequel la face ou extrémité d'entrée des gaz (28) et la face ou extrémité de sortie des gaz (30) sont planes, tous les passages (26) étant prévus non perpendiculaires aux faces (28, 30).

9. Corps poreux à écoulement de paroi (100, 400) selon la revendication 8, dans lequel la face d'entrée (28) et la face de sortie (30) sont parallèles, tous les passages (26) étant des passages parallèles linéaires bloqués.

10. Corps poreux à écoulement de paroi (100, 400) selon l'une quelconque des revendications précédentes, dans lequel la longueur des passages (26) est comprise entre 10 mm et 100 mm.

11. Corps poreux à écoulement de paroi (100, 400) selon la revendication 10, dans lequel la longueur des passages (26) est comprise entre 20 mm et 80 mm.

12. Corps poreux à écoulement de paroi (100, 400) selon l'une quelconque des revendications précédentes, dans lequel au moins certains des passages (26) sont coniques.

13. Corps poreux à écoulement de paroi (100, 400) selon l'une quelconque des revendications précédentes, qui est un corps moulé.

14. Noyau (12) pour un convertisseur catalytique, **caractérisé en ce que** le noyau comprend un corps poreux à écoulement de paroi (100, 400) selon l'une quelconque des revendications 1 à 13 incluse, et un catalyseur prévu pour la conversion de polluants non désirés dans les gaz de combustion à partir d'un échappement de moteur à combustion interne, le catalyseur étant supporté par le corps (100, 400).

15. Noyau (12) pour un piège catalytique de contrôle de particules diesel, **caractérisé en ce que** le noyau comprend un corps poreux à écoulement de paroi (100, 400) selon l'une quelconque des revendications 1 à 13 incluse, et un catalyseur prévu pour faciliter la combustion des particules de moteur diesel piégées par le corps (100, 400), le catalyseur étant supporté par le corps (100, 400).

16. Dispositif de traitement (200) pour le traitement des gaz d'échappement d'un moteur à combustion interne, **caractérisé en ce que** le dispositif comprend un corps poreux à écoulement de paroi (100, 400) selon l'une quelconque des revendications 1 à 13 incluse, placé dans un boîtier (14) possédant une entrée de gaz d'échappement (16) ou partie amont et une sortie de gaz d'échappement (18) ou partie aval.

17. Dispositif de traitement (200) selon la revendication 16, dans lequel la direction des passages (26) du corps fait un angle de 180° ou moins avec un axe disposé de façon centrale (38) traversant l'entrée des gaz d'échappement (16) ou partie amont et/ou un axe disposé de façon centrale (40) traversant la sortie de gaz d'échappement (18) ou partie aval.

18. Dispositif de traitement (200) selon la revendication 17, dans lequel l'angle entre la direction des passages (26) du corps (100, 400) et un axe disposé de façon centrale (38) traversant l'entrée de gaz d'échappement (16) ou partie amont et/ou un axe disposé de façon centrale (40) traversant la sortie de gaz d'échappement (18) ou partie aval est compris entre 90° et 175°.

19. Dispositif de traitement (200) selon l'une quelconque des revendications 16 à 18 incluse, qui est un piège à particules diesel.

20. Dispositif de traitement (200) selon la revendication 19, dans lequel le corps à écoulement de paroi (100, 400) du dispositif de traitement (200) supporte un catalyseur pour faciliter la combustion des particules diesel piégées par le corps (100, 400).

21. Dispositif de traitement (200) selon la revendication 19, qui, en plus de pouvoir fonctionner comme piège, qu'il soit catalytique ou non, pour un contrôle des particules diesel, est capable, de même, de fonctionner comme un convertisseur catalytique pour la conversion des polluants gazeux non désirés dans des gaz de combustion à partir d'un échappement de moteur à combustion interne.

**22.** Dispositif de traitement selon la revendication 21, comprenant au moins deux noyaux disposés en série, un noyau comprenant un catalyseur pour la conversion des polluants gazeux et un autre noyau comprenant en option un catalyseur pour la combustion des particules diesel, au moins un des noyaux comprenant ledit corps à écoulement de paroi (100, 400) selon l'un quelconque des revendications 1 à 13 incluse.

**23.** Dispositif de traitement selon la revendication 22, dans lequel au moins un des noyaux comprend un corps à débit traversant avec une pluralité de passages libres à extrémité ouverte s'étendant à partir d'une extrémité du corps vers l'autre extrémité de ce corps.

**24.** Dispositif de traitement (200) selon l'une quelconque des revendications 16 à 23 incluse, dans lequel la face d'entrée des gaz (28) et/ou la face de sortie des gaz (30) du corps poreux à écoulement de paroi (100, 400), lors d'une projection sur le boîtier (14) le long d'un axe perpendiculaire à la face (28, 30) elle-même, couvre une surface interne du boîtier (14) qui est plus grande que la surface de la face (28, 30) elle-même, améliorant ainsi l'échange de chaleur par rayonnement entre la face d'entrée des gaz (28) et/ou la face de sortie des gaz (30) et le boîtier (14).

**25.** Dispositif de traitement (200) selon la revendication 24, dans lequel au moins une parmi la face d'entrée (28) ou la face de sortie (30) du corps (100, 400) n'est pas perpendiculaire respectivement à un axe disposé de façon centrale (38, 40) traversant l'entrée des gaz d'échappement (16) ou partie amont ou la sortie des gaz d'échappement (18) ou partie aval.

FIG 1

FIG 2

FIG 3

FIG 4

FIG 5

FIG 6

**FIG 7**

**FIG 8**

**FIG 9**

FIG 10

FIG 11

**FIG 12**

EP 1 485 587 B1

**FIG 13**

EP 1 485 587 B1

FIG 14